# EUROPEAN PATENT APPLICATION

(11) **EP 0 658 987 A1**
(43) Date of publication of application: **21.06.1995**
(21) Application number: 94119880.6
(22) Date of filing: 15.12.1994
(51) Int. Cl.: H04B 10/10, G02B 27/64

(54) **Optical space communication apparatus**

(30) Priority: 17.12.1993 JP 344362/93
(71) Applicant: CANON KABUSHIKI KAISHA, Tokyo (JP)
(72) Inventor: Sakai, Mikio, c/o Canon Kabushiki Kaisha, Kawasaki-shi, Kanagawa-ken (JP)
(74) Representative: Weser, Wolfgang

(57) **Abstract**

An optical space communication apparatus includes transmitting device for transmitting a first beam of light, receiving device for receiving a second beam of light, and varying device for varying the angles of the first and second beams of light. The varying device has a variable angle prism. In the optical space communication apparatus, an angle of the beam of light is varied by the variable angle prism so that alignment of communication optical axis is corrected.

## Description

### BACKGROUND OF THE INVENTION

### Field of the Invention

This invention relates to an optical space communication apparatus for propagating a beam of light through free space to thereby effect communication.

### Related Background Art

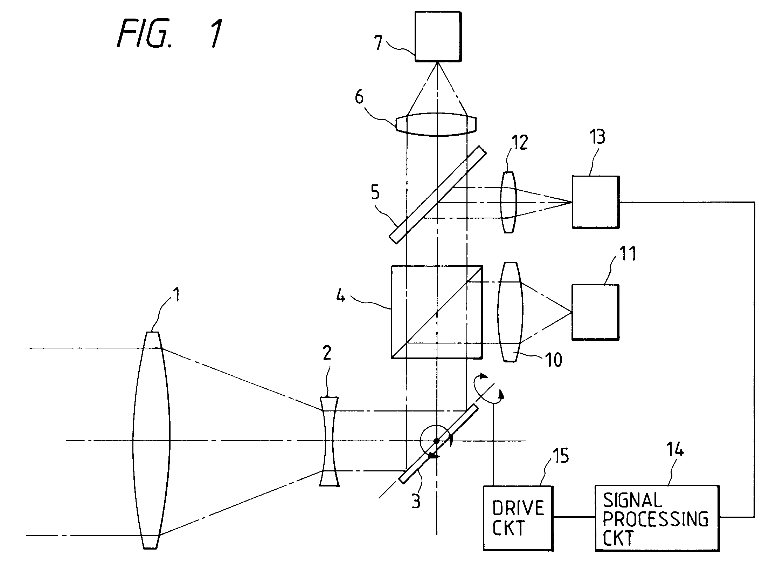

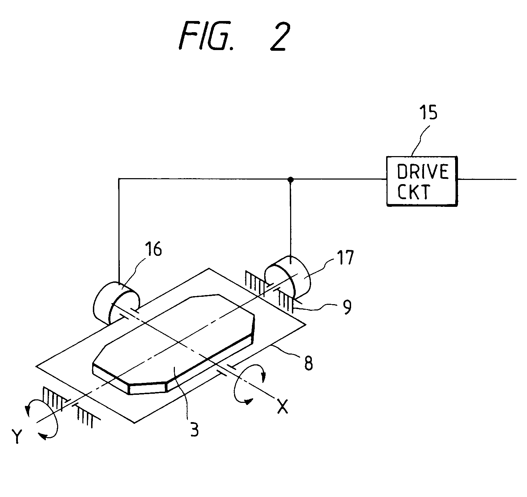

Referring to Figure 1 of the accompanying drawings which shows the construction of an optical space communication apparatus according to the prior art in which the misalignment of a communication optical axis is corrected, lenses 1, 2 and a movable mirror 3 are arranged on an optical path from a partner apparatus, and a polarizing beam splitter 4, a partially reflecting mirror 5, a lens 6 and a light receiving element 7 are arranged in succession in the direction of reflection of the movable mirror 3. As shown in Figure 2 of the accompanying drawings which partly shows the construction, the movable mirror 3 is rotatably engaged with a gimbal mechanism 8, which in turn is rotatably engaged with a fixed member 9 such as a lens barrel body, whereby the gimbal mechanism is rotatable relative to two axes orthogonal to each other.

Also, a light emitting element 11 is provided through a lens 10 in the direction of reflection of the polarizing beam splitter 4, and a position detecting element 13 such as a CCD or a division sensor is provided through a lens 12 in the direction of reflection of the partially reflecting mirror 5. Further, the output of the position detecting element 13 is connected to a drive circuit 15 through a signal processing circuit 14, and the output of the drive circuit 15 is connected to an actuator 16 for driving the movable mirror 3 and to an actuator 17 for driving the gimbal mechanism 8.

In case of optical space communication, transmission is effected by a beam of light which is emitted from the light emitting element 11 being reflected by the movable mirror 3, and reception is effected by a beam of light from the partner apparatus being caused to enter the light receiving element 7 through the movable mirror 3. Also, when the apparatus has varied its posture, the amount of variation in the posture is detected by the position detecting element 13 and the movable mirror 3 is driven by the actuators 16 and 17 to thereby correct the direction of emergence of the transmitted beam, the direction of incidence of the received beam and the spot position of the received beam on the surface of the light receiving element 7.

In the above-described example of the prior art, however, the entire optical system is refracted by the movable mirror 3 and therefore, the barrel of the optical system becomes complicated in shape, and this results in problems such as a higher manufacturing cost, the bulkiness of the apparatus and the increased weight of the apparatus.

Recently, there have been made various proposals regarding an image vibration correcting apparatus to be carried on a still camera, and it is disclosed in U.S. Patent No. 5,095,198, etc. to construct a correcting optical system by the use of a variable angle prism.

### SUMMARY OF THE INVENTION

It is the object of the present invention to provide an optical space communication apparatus in which the barrel of an optical system is simplified.

To achieve the above object, the optical space communication apparatus according to the present invention is an optical space communication apparatus which detects a variation in its own posture and effects optical communication by the use of a beam of light while correcting the alignment of a communication optical axis with a partner communication apparatus, characterized in that a variable angle prism is disposed in an optical path.

The optical space communication apparatus of the above-described construction varies the angle of the beam of light by the variable angle prism disposed in the optical path to thereby correct the alignment of the communication optical axis.

### BRIEF DESCRIPTION OF THE DRAWINGS

Figure 1 shows the construction of an optical space communication apparatus according to the prior art.

Figure 2 is a perspective view of a movable mirror.

Figure 3 shows the construction of a first embodiment of the optical space communication apparatus of the present invention.

Figure 4 illustrates a state in which the apparatus is subjected to a variation in its posture.

Figure 5 illustrates a state in which the apparatus is subjected to a variation in its posture.

Figure 6 illustrates a state in which misalignment has been corrected.

Figure 7 illustrates a state in which misalignment has been corrected.

Figure 8 shows the construction of a second embodiment of the optical space communication apparatus of the present invention.

Figure 9 shows the construction of another embodiment of the optical communication apparatus of the present invention.

Figure 10 shows the construction of still another embodiment of the optical communication apparatus of the present invention.

### DESCRIPTION OF THE PREFERRED EMBODIMENTS

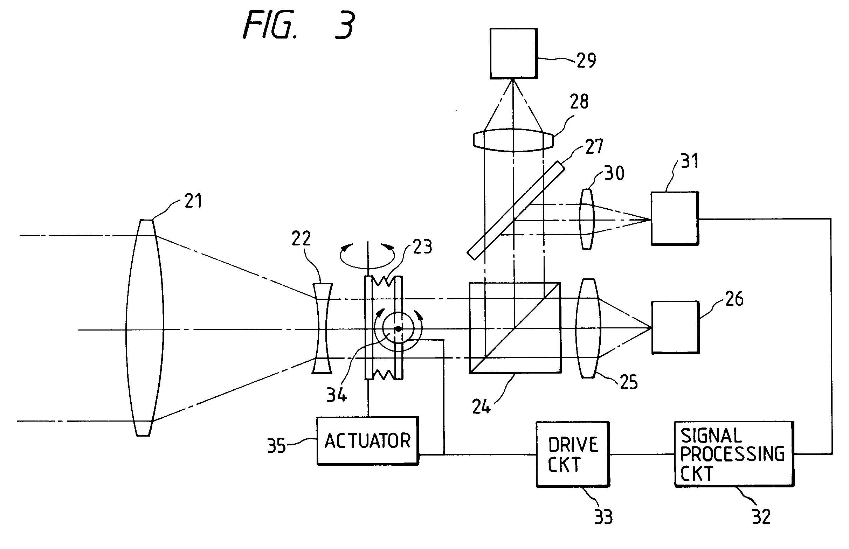

The present invention will hereinafter be described in detail with respect to some embodiments thereof shown in Figures 3 to 10.

Referring to Figure 3 which shows the construction of a first embodiment of the optical space communication apparatus of the present invention, converging lenses 21, 22 a variable angle prism 23, a polarizing beam splitter 24 transmitting a transmitted beam therethrough and reflecting a received beam, a converging lens 25 and a light emitting element 26 such as a laser diode generating a transmitted beam are arranged in succession on an optical path from a partner apparatus. Also, an optical element 27 such as a half mirror or a partially reflecting mirror for dividing the optical path of the received beam, a converging lens 28 and a light receiving element 29 comprising an avalanche photodiode, a photodiode or the like for converting the received beam into an electrical signal are arranged in succession in the direction of reflection of the polarizing beam splitter 24. Further, a position detecting element 31 such as a dividing element or a CCD for detecting the position of a spotlight is provided through a converting lens 30 in the direction of reflection of the optical element 27, and the output of the position detecting element 31 is connected to a drive circuit 33 through a signal processing circuit 32.

An actuator 34 for varying the pitch angle of the variable angle prism 23 and an actuator 35 for varying the yaw angle of the variable angle prism 23 are provided for the variable angle prism 23, and the actuators 34 and 35 are controllable by the drive circuit 33.

In case of optical space communication, transmission is effected by a beam of light which is emitted from the light emitting element 26 being transmitted through the converging lens 25, the polarizing beam splitter 24, the variable angle prism 23 and the converging lenses 22, 21 in succession, and reception is effected by a beam of light from the partner apparatus which has been transmitted through the converging lenses 21, 22 and the variable angle prism 23 and reflected by the polarizing beam splitter 24 being caused to enter the light receiving element 29 through the optical element 27 and the converting lens 28.

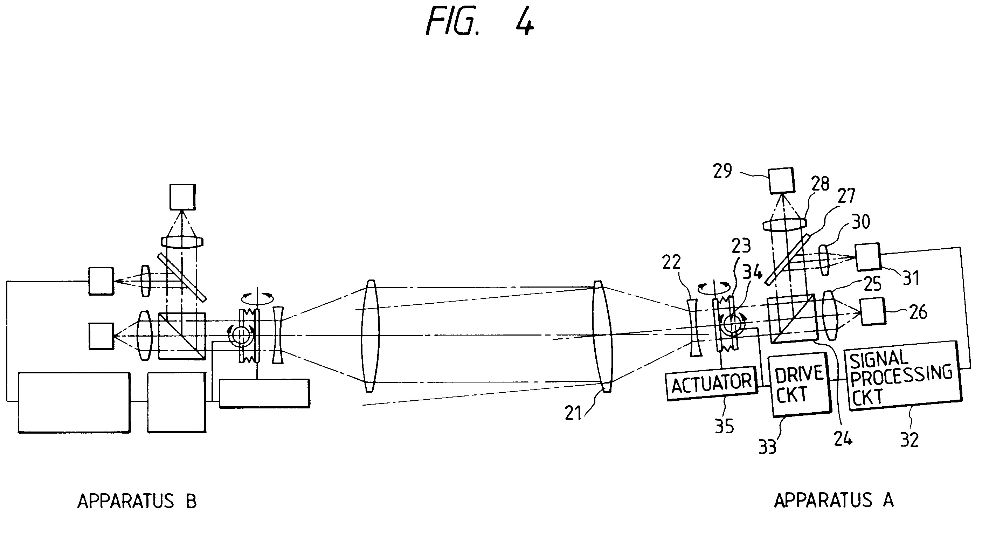

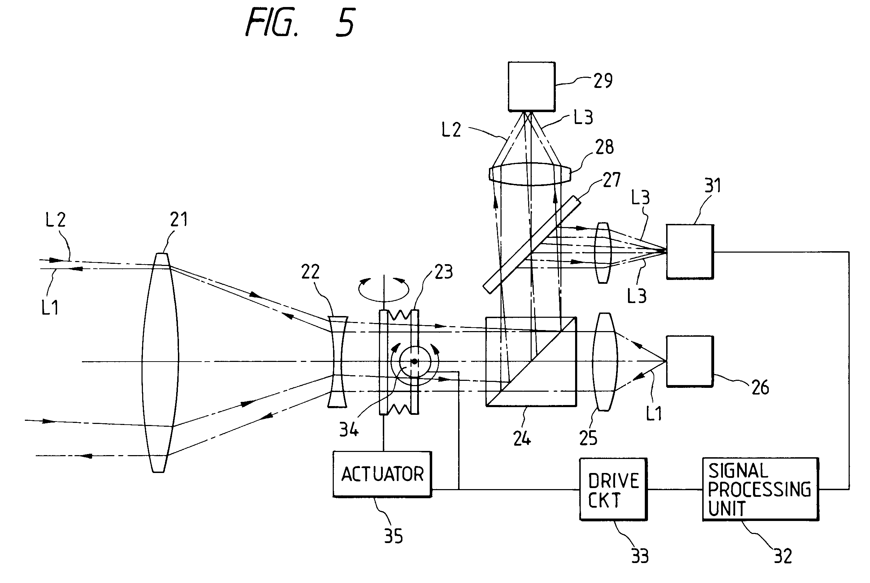

When at this time, by the influence of vibrations, shocks or the like from the outside, the apparatus A causes a posture variation in the direction of the pitch axis thereof as shown, for example, in Figure 4, the transmitted beam from the apparatus A deviates and therefore the apparatus B becomes incapable of receiving the transmitted beam. Figure 5 is an illustration showing the optical path of the apparatus A in such a case. In Figure 5, L1 designates the transmitted beam from the apparatus A, L2 denotes the received beam, and L3 designates the received beam before the apparatus A varies its posture. In such a state in which the apparatus is subjected to a variation in its posture, the position of the received spotlight on the light receiving element 29 and the position detecting element 31 moves and when this position of the received spot light exceeds the light receiving range of the light receiving element 29, the apparatus A also becomes incapable of receiving the transmitted beam.

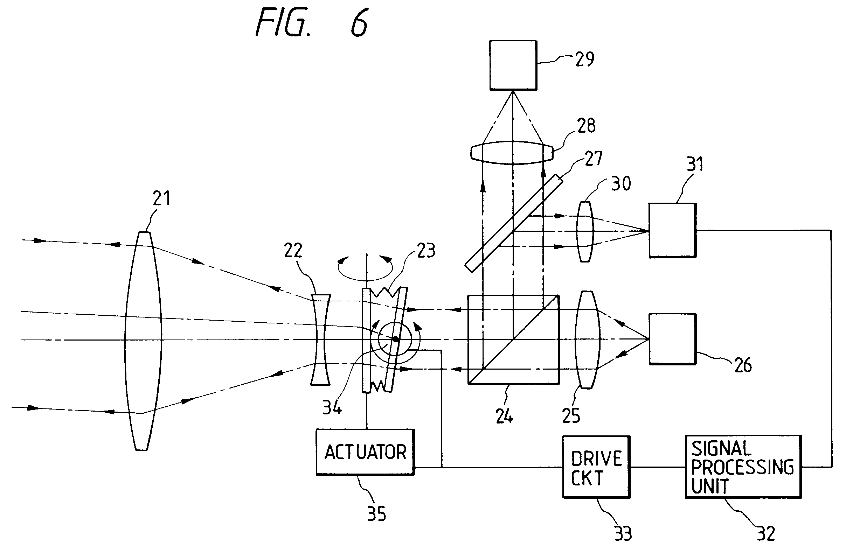

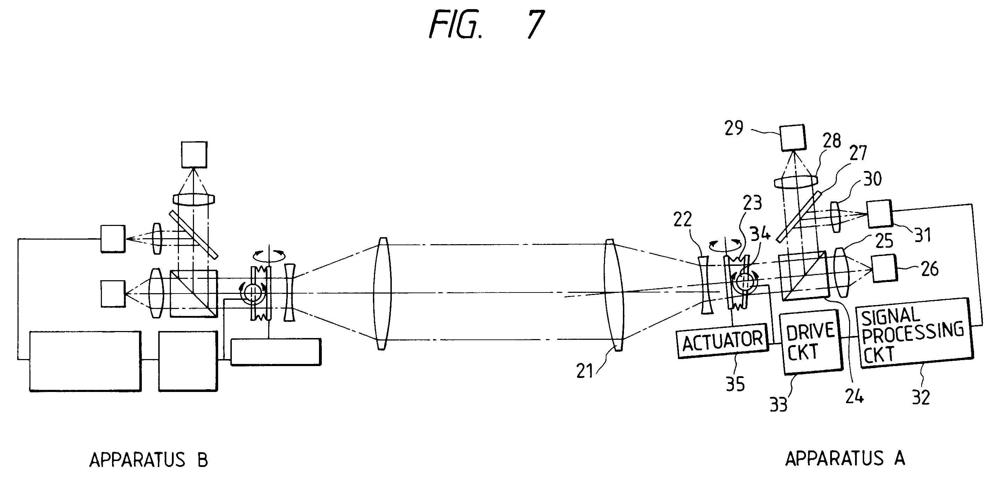

For this reason, the position detecting element 31 detects the amount of movement of the received spotlight and the signal processing circuit 32 calculates the amount of drive of the actuator 34 on the basis of this amount of movement and outputs it to the drive circuit 33. The drive circuit 33 drives the actuator 34 in accordance with this amount of drive and varies the pitch angle of the variable angle prism 23. Thereby, the direction of emergence (the angle of emergence) of the transmitted beam and the direction of incidence (the angle of incidence) of the received beam are varied and the received spotlight keeps its initial position before the apparatus B is subjected to a variation in its posture, as shown in Figure 6, and the transmitted beam from the apparatus A also keeps its initial position before the apparatus A is subjected to a variation in its posture, as shown in Figure 7 and therefore, both of the apparatuses A and B become capable of receiving.

In the present embodiment, there has been shown a method of correcting misalignment when the apparatus is subjected to a posture variation in the direction of the pitch axis, but when the apparatus varies its posture in the direction of the yaw axis, the yaw angle of the variable angle prism 23 is varied by the actuator 35, whereby misalignment can be corrected as in the case of the direction of the pitch axis.

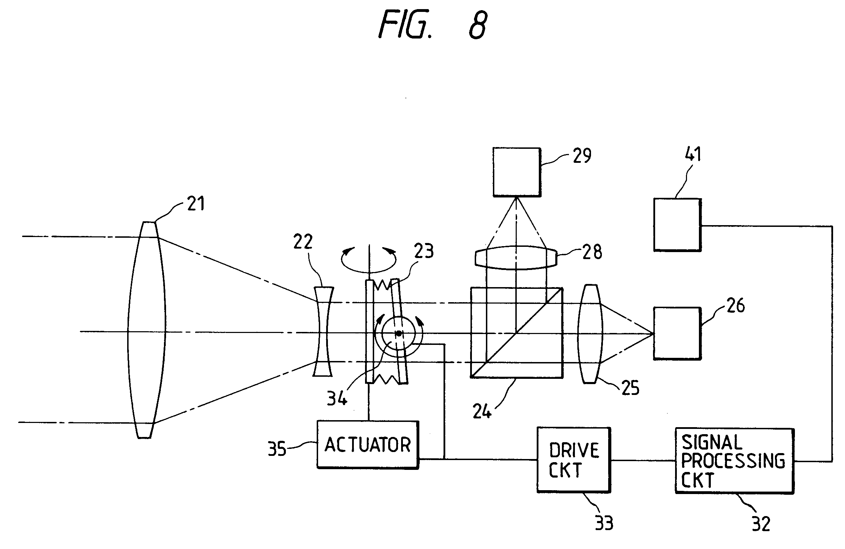

Figure 8 shows the construction of a second embodiment of the optical space communication apparatus of the present invention. In Figure 8, the same reference numerals as those in Figure 3 designate the same members. In this second embodiment, the optical element 27, the converging lens 30 and the position detecting element 31 are eliminated and the output of an acceleration sensor 41 fixed to the apparatus is connected to the signal processing circuit 32.

Thus, any variation in the posture of the apparatus is detected by the acceleration sensor 41 and as in the first embodiment, misalignment is corrected by the variable angle prism 23, whereby the optical elements can be further curtailed than in the first embodiment and therefore, the construction of the apparatus can be more simplified.

The optical space communication apparatus of the present invention is designed as will be described below.

In case of optical space communication, transmission is effected by a beam of light which is emitted from the light emitting element 26 being transmitted through the polarizing beam splitter 24 and the variable angle prism 23 in succession, and reception is effected by a beam of light from the partner apparatus which has been transmitted through the variable angle prism 23 and reflected by the polarizing beam splitter 24 being caused to enter the light receiving element 29 through the optical element 27. When the apparatus causes a variation in its posture, the amount of movement of the position of the received spotlight is detected by the position detecting element 31, and on the basis of this amount of movement, the variable angle prism 23 is driven by the actuators 34 and 35 to thereby vary the angle of emergence of the transmitted beam and the angle of incidence of the received beam and effect the correction of misalignment.

The above embodiments have been described with respect to a construction in which a variable angle prism is used in the optical space communication apparatus effecting the transmission and reception of a beam of light, but a variable angle prism can be disposed in the optical path of an optical space communication for effecting only the transmission of a beam of light or an optical space communication apparatus for effecting only the reception of a beam of light, thereby varying the angle of emergence of the transmitted beam or the angle of incidence of the received beam and effecting the correction of misalignment.

As described above, in the optical space communication apparatus according to the present invention, the variable angle prism is disposed in the optical path, whereby the manufacturing cost of the apparatus can be curtailed and the compactness and light weight of the apparatus can be realized.

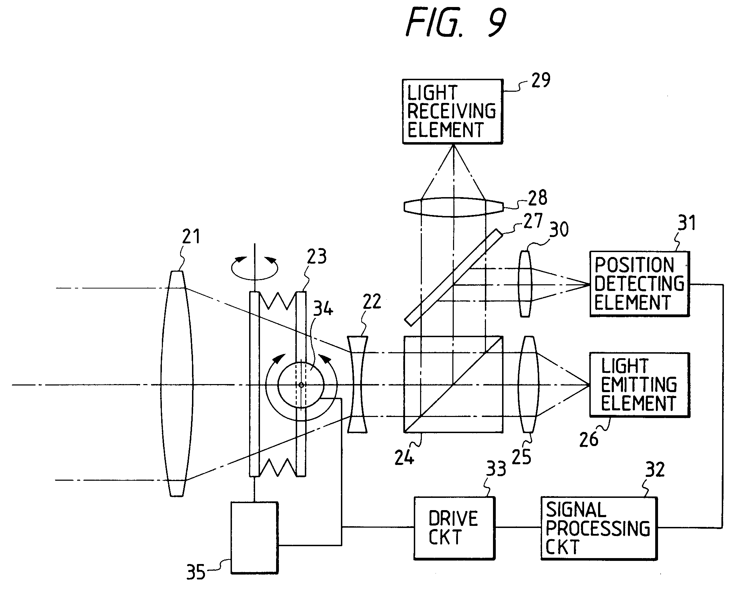

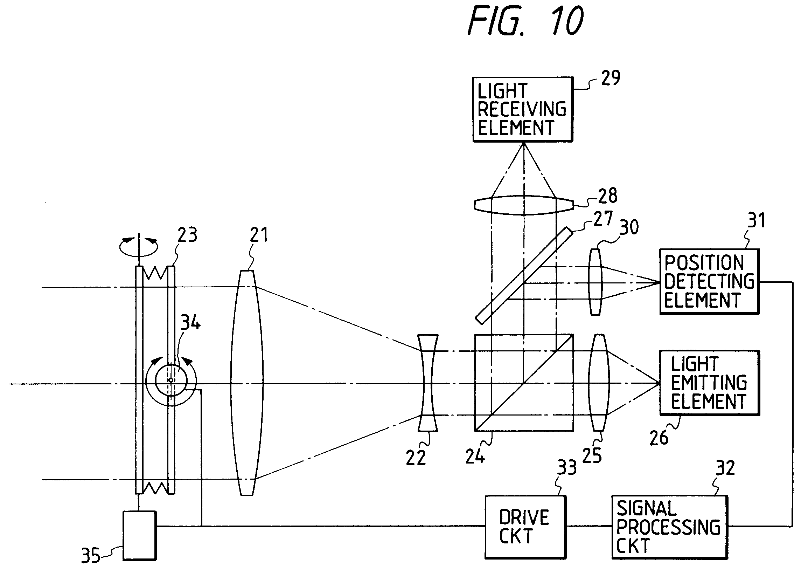

In the embodiments discussed above, the variable angle prism 23 is arranged in the optical path between the converging lens 22 and the polarizing beam splitter 24, but the correction of misalignment can be also effected by a structure in which the variable angle prism 23 is arranged in the optical path between the converging lens 21 and the converging lens 22, as shown in Figure 9, or a structure in which the variable angle prism 23 is arranged in the optical path between the converging lens 21 and the partner apparatus, as shown in Figure 10.

## Claims

1. An optical space communication apparatus comprising:
transmitting means for transmitting a first beam of light;
receiving means for receiving a second beam of light; and
varying means for varying the angles of said first and second beams of light, said varying means having a variable angle prism.

2. An optical space communication apparatus comprising:
transmitting means for transmitting a first beam of light;
receiving means for receiving a second beam of light;
a variable angle prism for varying the angles of said first and second beams of light;
detecting means for detecting any variation in the posture of the apparatus; and
control means for controlling said variable angle prism in conformity with the result of the detection by said detecting means.

3. The apparatus of Claim 2, wherein said detecting means is an acceleration sensor.

4. An optical space communication apparatus comprising:
transmitting means for transmitting a beam of light; and
varying means for varying the angle of said beam of light, said varying means having a variable angle prism.

5. An optical space communication apparatus comprising:
transmitting means for transmitting a beam of light;
a variable angle prism for varying the angle of said beam of light;
detecting means for detecting any variation in the posture of the apparatus; and
control means for controlling said variable angle prism in conformity with the result of the detection by said detecting means.

6. The apparatus of Claim 5, wherein said detecting means is an acceleration sensor.

7. An optical space communication apparatus comprising:
receiving means for receiving a beam of light; and
varying means for varying the angle of said beam of light, said varying means having a variable angle prism.

8. An optical space communication apparatus comprising:
receiving means for receiving a beam of light;
a variable angle prism for varying the angle of said beam of light;
detecting means for detecting any variation in the posture of the apparatus; and
control means for controlling said variable angle prism in conformity with the result of the detection by said detecting means.

9. The apparatus of Claim 8, wherein said detecting means is an acceleration sensor.
